# FASCICULE DE BREVET EUROPEEN

(11) **EP 0 477 079 B1**
(45) Date de publication et mention de la délivrance du brevet: **03.05.1995**
(21) Numéro de dépôt: 91402453.4
(22) Date de dépôt: 16.09.1991
(51) Int. Cl.: B64C 13/42, F15B 20/00

(54) **Actionneur hydraulique à mode hydrostatique de fonctionnement de préférence en secours, et système de commande de vol le comportant**
Hydrostatische Betätigungsvorrichtung, insbesondere als Sicherheitsvorrichtung und ein Flugsteuersystem, das eine solche Betätigungsvorrichtung enthält
Hydraulic actuator with a hydrostatic functioning mode, for use in emergencies and flight control system provided with such a device

(30) Priorité: 19.09.1990 FR 9011538
(43) Date de publication de la demande: 25.03.1992
(73) Titulaire: AEROSPATIALE Société Nationale Industrielle, 75781 Paris Cédex 16 (FR)
(72) Inventeur: Favre, Christian, F-31170 Tournefeuille (FR); van den Bossche, Dominique, F-31370 Rieumes (FR)
(74) Mandataire: Rinuy, Santarelli

(56) Documents cités:
- FR-A- 2 603 865
- GB-A- 2 053 419
- US-A- 3 902 318
- US-A- 4 905 933

## Description

L'invention concerne un actionneur hydraulique de haute fiabilité, destiné notamment mais pas exclusivement à la manoeuvre d'organes mécaniques aéronautiques tels que gouvernes, ailerons ou déflecteurs au sein d'un système de commandes de vol, voire d'orientation de train avant d'avion.

Ainsi qu'on le sait, dans les systèmes de commandes de vol connus, les exigences de fiabilité s'appliquant en particulier aux avions de transport civil rendent nécessaire de prévoir, pour les actionneurs hydrauliques, plusieurs (en pratique trois) circuits hydrauliques dont l'un au moins permet de prendre le relais d'un autre en cas de défaillance. Cette redondance se traduit par un supplément sensible en masse, en encombrement; en pratique on recherche en outre à obtenir des fiabilités élevées pour chacun des circuits.

L'invention a pour objet de pallier les inconvénients précités en permettant, tout en restant au même niveau de fiabilité, de réduire le nombre de circuits hydrauliques nécessaire, en combinant à au moins une servocommande électrohydraulique un groupe de pompage local, spécifique à cette servocommande ou susceptible de coopérer avec plusieurs servocommandes voisines, destiné à n'intervenir qu'en cas de secours, en agissant sur un volume de fluide limité, de préférence contenu dans sa majorité dans la (ou les) servocommande(s) considérées, prélevé sur le circuit hydraulique principal considéré, au travers d'éventuels clapets, vannes ou valves.

Plus généralement l'invention vise à pouvoir agir sur un ensemble à vérin à double effet (vérin à double effet, ou vérins à simple effet en opposition), linéaire ou rotatif, au choix, de façon hydraulique ou hydrostatique, le mode hydraulique étant de préférence, mais pas nécessairement, un mode nominal.

L'invention propose ainsi un actionneur hydraulique comportant au moins un système de vérin à double effet, un organe mobile de commutation, monté dans un logement connecté hydrauliquement, d'une part à ce système de vérin, d'autre part, au travers d'un organe de distribution hydraulique, à des conduits d'alimentation et d'évacuation de fluide équipés de clapets d'isolation, une réserve de fluide connectée au conduit d'évacuation, et un organe de pilotage adapté à commander cet organe mobile de commutation entre une configuration neutre, dans laquelle le système de vérin est isolé hydrauliquement vis à vis de l'organe de distribution hydraulique et une configuration active de service dans laquelle le système de vérin communique avec ledit organe de distribution hydraulique, caractérisé en ce qu'il comporte en outre un groupe de pompage commandé à vitesse variable, connecté par un circuit auxiliaire de dérivation, d'une part avec le logement de l'organe mobile de commutation, d'autre part avec la réserve de fluide, l'organe mobile de commutation étant à trois positions et étant muni d'un moyen de pilotage complémentaire adapté à commander ledit organe mobile de commutation entre ladite configuration neutre et une seconde configuration active dans laquelle le système de vérin communique avec ce circuit auxiliaire, grâce à quoi le système de vérin, le groupe de pompage et le circuit auxiliaire constituent une transmission hydrostatique.

On appréciera que, au choix, un tel groupe de pompage (qui peut avoir une fonction de secours), sous réserve de prévoir des connections hydrauliques appropriées, (ce qui est à la portée de l'homme de métier) peut commander plusieurs systèmes de vérins au travers des organes mobiles de commutation associés, l'individualisation de la commande de chaque système de vérin étant obtenue par action ou non sur l'organe mobile associé.

Selon des dispositions avantageuses de l'invention, éventuellement combinables :
- le groupe de pompage est spécifique dudit système de vérin (il s'agit de préférence d'un vérin à double effet).
- le groupe de pompage fait partie d'un module auxiliaire assujetti à un module de base comportant le système de vérin, l'organe mobile de commutation, l'organe de distribution hydraulique, l'organe de pilotage de l'organe mobile de commutation, la réserve de fluide et les conduits d'alimentation et d'évacuation de fluide.
- l'actionneur comporte un conduit de court-circuit ou bipasse, adapté à mettre le système de vérin en court-circuit en configuration neutre de l'organe mobile de commutation.
- dans le conduit de court-circuit est prévu une restriction.
- l'organe mobile de commutation est un tiroir à mouvement linéaire,
- l'organe de distribution hydraulique est une servovalve.
- l'organe de pilotage de l'organe mobile de commutation est une électrovanne connectée aux conduits d'alimentation et d'évacuation de fluide et à une extrêmité du logement de l'organe mobile de commutation.
- l'organe de pilotage complémentaire, distinct de l'organe de pilotage, est à commande électromagnétique, et est adapté à agir sur le tiroir en sens opposé au sens dans lequel agit l'organe de pilotage.
- le groupe de pompage comporte un moteur électrique entraînant une pompe hydraulique bidirectionnelle connectée à un conduit de drainage raccordé à la reserve de fluide et à deux conduits de refoulement ou d'aspiration, suivant le sens de rotation, raccordés au logement du tiroir.
- dans chaque conduit de refoulement ou d'aspiration peut être disposé un double clapet piloté par les pressions des dits conduits, admettant une configuration neutre d'obstruction et deux positions extrêmes dans lesquelles les conduits d'aspiration et de refoulement sont mis en communication avec les chambres du vérin via l'organe mobile de commutation lorsque celui-ci est commandé en sa seconde configuration.

L'invention propose également une utilisation de cet actionneur dans laquelle la mise en oeuvre du groupe de pompage est réservée a un mode de fonctionnement de secours.

Elle propose également un système de commandes de vol, pour un aéronef pourvu de jeux de surfaces orientables pour la commande de cet aéronef en roulis, en tangage et en lacet, respectivement, comportant des circuits hydrauliques centralisés indépendants, un réseau électrique, et des actionneurs pour la manoeuvre respectivement de ces jeux de surfaces orientables, l'un au moins desdits actionneurs comportant un organe d'actionnement commandé par une servo-commande alimentée par l'un desdits circuits hydrauliques centralisés, ce système étant caractérisé en ce que ledit actionneur comporte un module hydrostatique monté en parallèle sur cette servo-commande, et comportant un groupe de pompage à alimentation électrique, et un ensemble de commutation adapté à commander l'organe d'actionnement, soit par la servo-commande, soit par le module hydrostatique, ce module hydrostatique étant connecté à une source de puissance électrique.

De manière préférée :
- ce système comporte, en parallèle sur ledit actionneur comportant une servo-commande et un module hydrostatique, une autre servo-commande alimentée par un autre desdits circuits hydrauliques,
- ladite source de puissance électrique fait partie du réseau électrique ou, à l'inverse,
- ladite source de puissance électrique est indépendante dudit réseau électrique,
- ledit actionneur est connecté à des moyens de pilotage par un réseau de commande indépendant de ce réseau électrique,
- les surfaces orientables comportent deux ailerons soumis chacun à un tel actionneur comportant une servo-commande et un module hydrostatique,
- chacun de ces ailerons est en outre soumis à l'action d'une servo-commande,
- il comporte deux circuits hydrauliques centralisés indépendants respectivement, pressurisés chacun par un moteur que comporte l'aéronef, et un troisième circuit hydraulique centralisé indépendant pressurisé par une électropompe connectée au réseau électrique, situé à l'arrière de l'aéronef, tous les actionneurs situés à proximité des ailes de l'aéronef étant connectés à l'un ou l'autre des circuits hydrauliques pressurisés par les moteurs de l'aéronef.

On appréciera que l'actionneur permet une grande standardisation de composant, le module de servocommande pouvant avoir la même constitution quel que soit son montage futur (si aucun module auxiliaire de secours n'est nécessaire, il suffit d'obturer les conduits qui débouchent).

Des objets, caractéristiques et avantages de l'invention ressortent de la description qui suit, donnée à titre d'exemple non limitatif, en regard des dessins annexés sur lesquels :
- la figure 1 est une vue simplifiée en plan d'un actionneur selon l'invention, en configuration neutre de service,
- la figure 2 en est une vue similaire, en configuration active de service,
- la figure 3 en est une autre vue similaire, en configuration de secours,
- la figure 4 est le schéma hydraulique de cet actionneur, et
- la figure 5 est un schéma d'un système de commandes de vol comportant des actionneurs du type décrit aux figures 1 à 4.

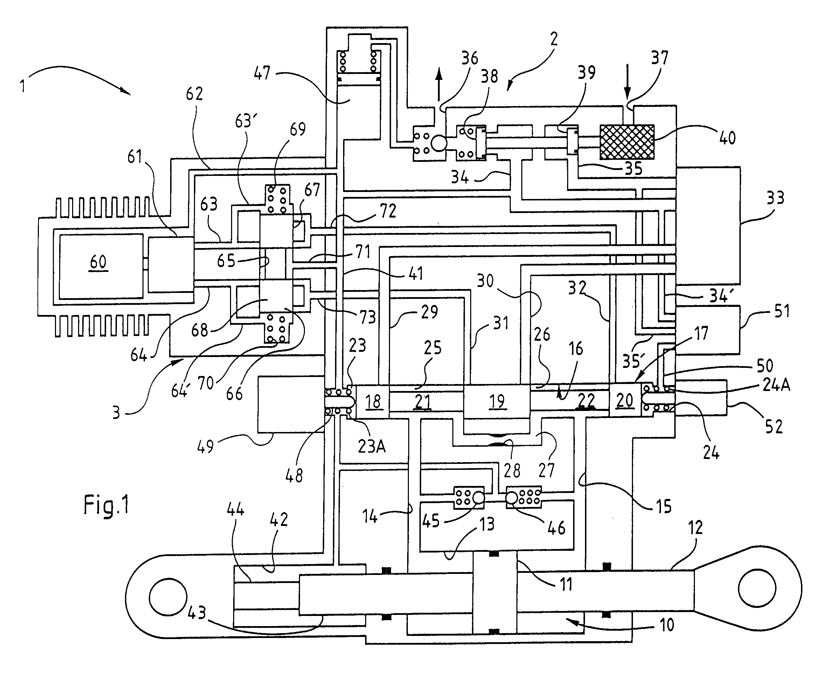

Les figures 1 à 3 représentent un actionneur hydraulique à secours électrique conforme à l'invention, désigné sous la référence générale 1.

Cet actionneur 1 est formé d'un module principal de servocommande hydraulique 2, susceptible d'être utilisé isolément, et d'un module électrohydrostatique auxiliaire 3, ici destiné à un fonctionnement en secours.

Le module principal 2 comporte un vérin a double effet 10 formé d'un piston 11 dont la tige de piston 12 commande en position un organe extérieur non représenté. Le piston 11 est monté coulissant dans un cylindre de verin 13 raccordé en ses extrémités à des conduits de circulation de fluide 14 et 15 qui débouchent à l'intérieur du logement 16 d'un tiroir de commutation 17 à trois positions.

Le tiroir de commutation 17 comporte trois corps 18 à 20 reliés par des tiges 21 et 22 coulissant de façon étanche dans le logement 16 en y ménageant quatre chambres 23 à 26, à savoir de première et seconde chambres extrêmes 23 et 24 et de première et seconde chambres intermédiaires 25 et 26.

Dans les chambres extrêmes 23 et 24 sont disposés des organes de rappel élastique (ici des ressorts 23A et 24A sollicités en compression) tendant conjointement à maintenir le tiroir 17 en une configuration médiane neutre.

Dans le logement 16 de ce tiroir débouche également un conduit de court-circuit (bipasse) 27 adapté, dans la configuration médiane neutre du tiroir, à mettre les chambres intermédiaires en communication l'une avec l'autre; les embouchures de ce conduit sont donc espacées d'une distance sensiblement égale à la dimension axiale du corps central 19.

Dans ce conduit 27 est avantageusement prévue une restriction 28 destinée à freiner la circulation de fluide entre les chambres intermédiaires 25 et 26, donc entre les chambres du vérin 10, grâce à quoi le vérin agit en amortisseur. En fait cet effet d'amortisseur peut être aussi obtenu en choisissant une section de passage réduite pour l'un des orifices de communication du conduit 27 avec le logement 16.

Dans le logement 16 du tiroir débouchent en outre, deux paires de conduits 29 et 30, et 31 et 32 dont les embouchures sont obturées par le tiroir en configuration de repos de celui-ci : les conduits 29 et 30 de l'une des paires sont respectivement obturés par le corps central 19 et l'un 18 des corps extrêmes, tandis que les conduits 31 et 32 de l'autre paire sont obturés par le corps central et l'autre des corps extrêmes. Les embouchures des conduits de chaque paire sont espacées axialement d'une distance égale à la somme des dimensions axiales du corps central et de l'une des chambres intermédiaires associées, grâce à quoi un déplacement du tiroir dans l'un ou l'autre sens dégage simultanément les conduits d'une paire tout en maintenant obturés les conduits de l'autre paire.

L'une 29 - 30 des paires de conduits aboutit à une servovalve 33 à laquelle parviennent par ailleurs des conduits d'arrivée et d'évacuation de fluide 34 et 35 : Cette servovalve détermine celui des conduits de ladite paire qui est mis en communication avec l'arrivée de fluide tandis que l'autre conduit est mis en communication avec l'évacuation de fluide.

Les conduits 34 et 35 débouchent hors du module principal par des orifices 36 et 37 adaptés à être connectés à des lignes extérieures non représentées.

Une paire de clapets d'isolation 38 et 39 est disposée au travers des conduits 34 et 35 en sorte de ne dégager ceux-ci qu'en présence, à l'orifice 37, d'une pression d'alimentation suffisante. Un élément de filtrage 40 est avantageusement disposé au travers du conduit 35 d'arrivée de fluide.

Dans le conduit 34 d'évacuation de fluide débouche un conduit auxiliaire d'échappement ou de fuite 41 communiquant avec l'une 23 des chambres extrêmes du logement 16 du tiroir de commutation 17 et une chambre 42 dans laquelle pénètre un prolongement 43 de la tige de piston 12.

Dans cette chambre 42 est par ailleurs prévu un capteur 44 destiné à relever la position instantanée du piston 11.

Le conduit auxiliaire d'échappement 41 communique en outre avec les conduits 14 et 15 au travers de clapets anti-retour 45 et 46.

Ce conduit auxiliaire communique avec un accumulateur 47 comportant une réserve de fluide destinée à compenser les variations de volume du fluide hydraulique résultant d'éventuelles dilatations thermiques. En pratique, cet accumulateur participe au maintien d'une pressurisation du fluide contenu dans l'actionneur.

Dans l'une 23 des chambres extrêmes du logement du tiroir 17 pénètre axialement le doigt 48 d'un organe 49 de pilotage complémentaire du tiroir, ici de type électro-magnétique, tandis que l'autre 24 des chambres extrêmes communique par un conduit de pilotage 50 avec un organe de pilotage 51, ici une électrovanne, à laquelle parviennent également des conduits de dérivation 34′ et 35′ provenant des conduits 34 et 35 d'arrivée et d'évacuation de fluide.

Dans l'une 24 des chambres extrêmes pénètre un capteur de position 52 destiné à relever la position instantanée du tiroir.

Le module auxiliaire de secours 3 comporte un moteur électrique 60, de préférence du type à courant continu sans balais, ainsi que ses équipements électroniques de commutation (non représentés).

Le moteur 60 entraine une pompe hydraulique bidirectionnelle 61 munie d'un conduit de drainage 62 et de deux conduits d'aspiration ou de refoulement 63 et 64. Ces conduits d'aspiration ou de refoulement débouchent dans le logement 65 d'un double clapet coulissant 66 comportant deux corps de clapet 67 et 68 solidaires l'un de l'autre et obturant normalement les conduits de sortie 63 et 64. Dans les extrémités du logement 65 débouchent des conduits de pilotage 63′ et 64′ communiquant avec lesdits conduits de sortie. Des organes de rappel élastique 69 et 70 tendent à maintenir le double clapet en une configuration médiane neutre.

Dans le logement 65 du double clapet débouchent un conduit médian 71, ainsi que deux paires de tronçons raccordés chacune à une même conduite de communication 72 ou 73. Les tronçons de chaque paire ont une position et un écartement tels que, en configuration neutre du double clapet, ils soient tous obturés par l'un ou l'autre des corps de clapet mais que, dès que le double clapet se déplace dans l'un ou l'autre sens, celui des conduits de sortie 63 ou 64 où règne la pression la plus élevée communique avec l'une des conduites de communication 72 ou 73 tandis que l'autre de ces conduites communique avec l'autre conduite de communication et avec le conduit médian 71.

Le module auxiliaire de secours 3 est assujetti au module principal 2 (par tous moyens connus appropriés non représentés) de manière à ce que le conduit médian 71 soit mis en communication avec la réserve de fluide 47, ici par l'intermédiaire du conduit auxiliaire 41, tandis que les conduits de communication 72 et 73 sont raccordés aux conduits 31 et 32 débouchant dans le logement du tiroir distributeur.

Lorsqu'aucun des modes "normal" ou "secours" n'est activé, le tiroir 17 reste dans sa configuration neutre de la figure 1. Ainsi que cela a été exposé plus haut, le conduit 27 assure un amortissement des variations parasites de la position du piston 11 de vérin.

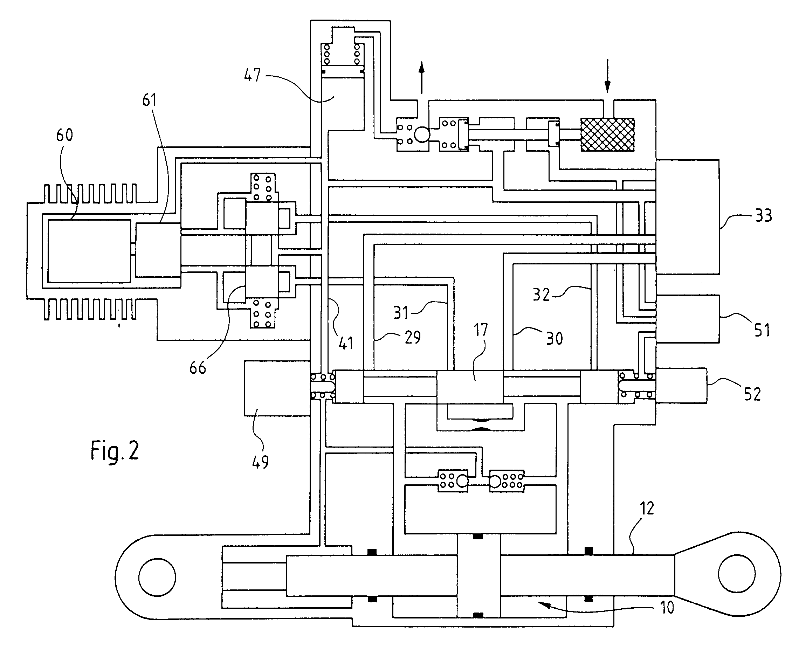

En mode de fonctionnement "normal", on active l'électrovanne 51 en sorte de déplacer le tiroir vers la configuration de la figure 2 : la servovalve 33 détermine alors, par sa position, de quel côté du piston 11 doit être appliquée la pression de la conduite 35, pour rétracter ou au contraire déployer la tige de piston 12.

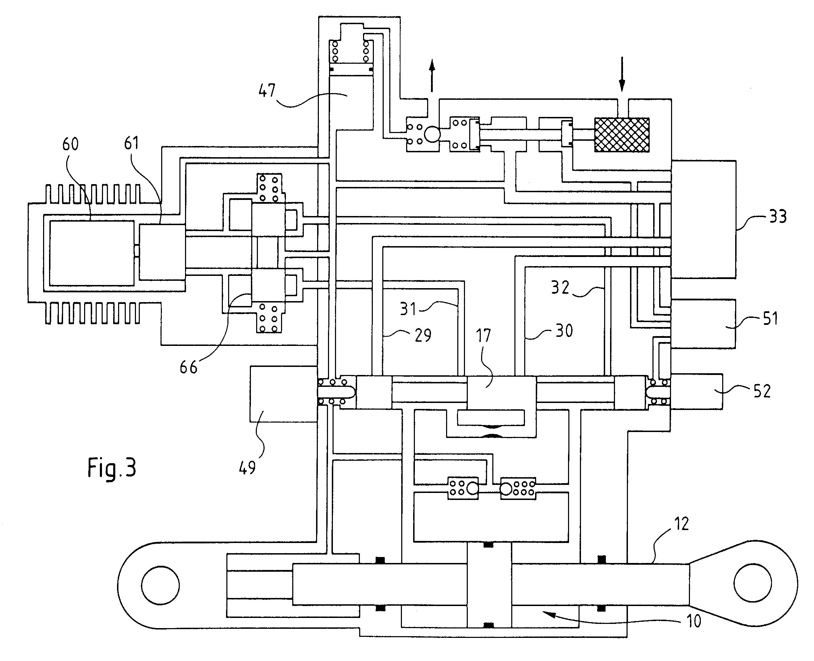

En cas de fonctionnement de "secours", en cas de panne dans l'alimentation hydraulique du module principal 2 ou dans la commande de ses composants électriques on active l'organe 49 en sorte d'amener le tiroir dans la configuration de la figure 3 et on fait tourner le moteur 60 en sorte de débiter du fluide dans celui des conduits 63 ou 64 qui communique avec la chambre du vérin 10 que l'on souhaite mettre en pression.

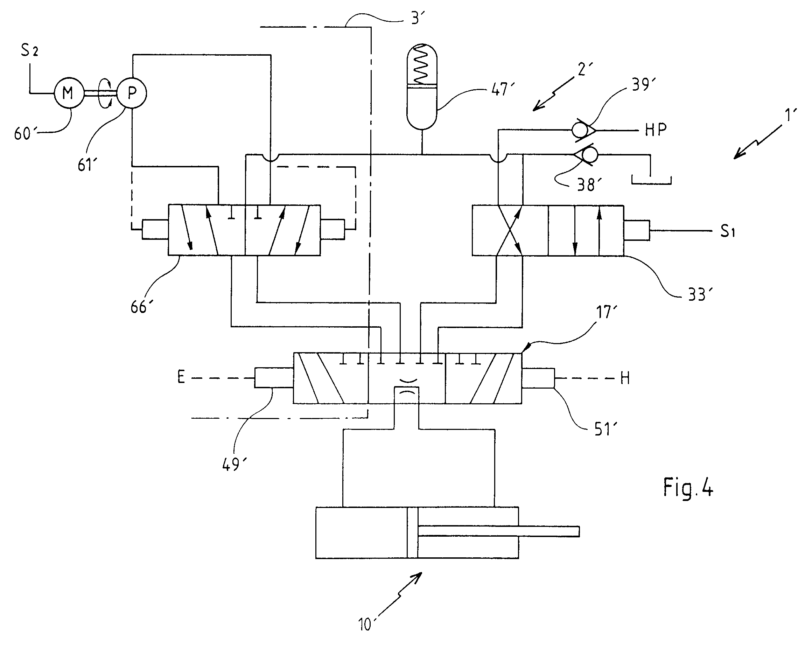

La structure hydraulique générale de l'actionneur est schématisée à la figure 4 où l'on retrouve, affectés d'un indice prime, les principaux éléments définis à propos de la figure 1.

On voit ainsi un vérin 10′, un organe mobile de commutation à 3 positions 17′, un organe de distribution hydraulique 33′ de préférence à commande progressive, connecté à un circuit hydraulique extérieur au travers de clapets d'isolation 38′ et 39′ et déterminant, au travers du tiroir 17′, la répartition des pressions dans le vérin 10′, une réserve de fluide 47′, un organe de pilotage 51′, adapté à commander le tiroir 17′ dans deux de ses positions, un groupe de pompage 60′ + 61′ à vitesse variable et à commande électrique déterminant avec le clapet 66′ le régime des pressions dans le vérin 10′, et un organe auxiliaire 49′ de pilotage du tiroir adapté à l'amener dans la troisième de ses positions, établissant la communication hydraulique entre le groupe de pompage et le vérin qui constituent ainsi une transmission hydrostatique. Cet actionneur fonctionne en mode nominal (signal S₁ appliqué à l'organe de distribution 33′ et signal H appliqué à l'organe de pilotage 51′ agissant de façon hydraulique sur le tiroir 17′) ou en mode de secours (signal de vitesse S₂ appliqué au moteur 60′ et signal E appliqué à l'organe de pilotage 49′).

Il va de soi que la description qui précède n'a été proposée qu'à tître d'exemple non limitatif et que de nombreuses variantes peuvent être proposées par l'homme de l'art sans sortir du cadre de l'invention selon les revendications qui suivent. Ainsi notamment le vérin (ou groupe de vérins en opposition) peut être linéaire ou rotatif; le tiroir 17 peut être remplacé par un organe mobile rotatif de tout type connu approprié et les organes 49′ et 51′ peuvent être, de toute façon connue appropriée, confondus en un même dispositif de pilotage de l'organe mobile de commutation.

On appréciera que, n'étant ici prévu qu'en cas de secours, le module 3 est, lorsqu'il est intégré à un système de commande de vol d'un avion, soumis à des exigences de fiabilité compatibles avec une faible masse et un faible encombrement pour ce module; cela est dû au fait que ce module doit pouvoir effectuer des cycles de travail peu sévères (vitesse de braquage réduite, comparable à celle que l'on admet en cas de double panne hydraulique sur les avions connus; pas de vols exceptionnels à prendre en considération; faible durée de fonctionnement par rapport à la durée de service de l'avion; exigences d'étanchéité limitées à la durée d'un seul vol...).

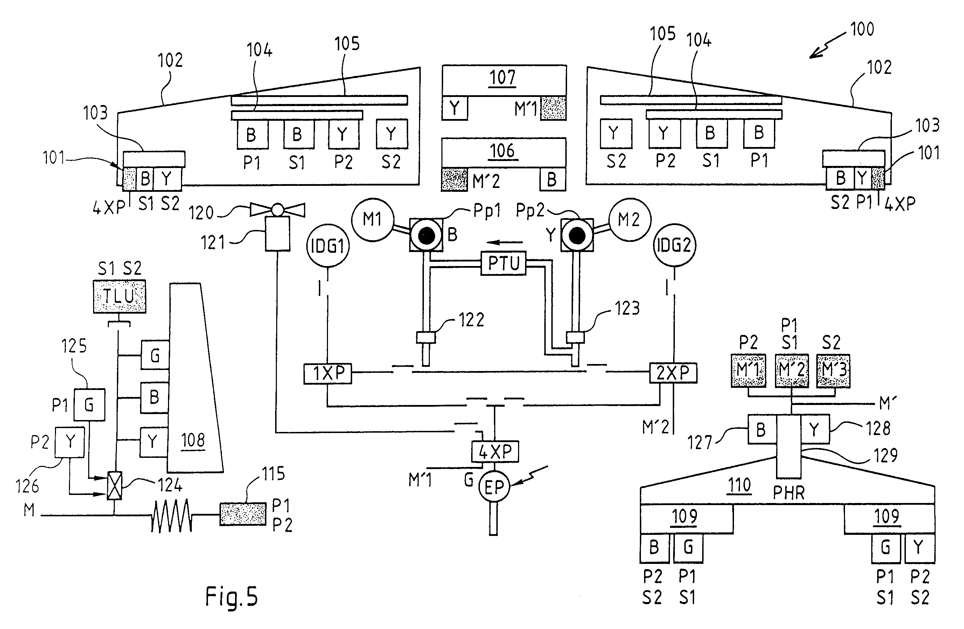

La figure 5 représente un système de commandes de vol 100 notamment original en ce qu il comporte des actionneurs hydrauliques a secours électrique 101, conformes aux actionneurs 1 ou 1' des figures 1 à 4 ou de structure équivalente, c'est-à-dire qu'ils peuvent recevoir soit de la puissance hydraulique, soit de la puissance électrique.

Sur cette figure 5 sont schématisés, selon un arrangement classique dans ce domaine :
- deux ailes d'avion 102 munies d'ailerons 103 et de spoilers 104 et 105 pour les commandes de roulis, d'aérofreins et de déporteurs,
- des volets 106 prévus sur le bord de fuite des ailes,
- des becs 107 prévus sur le bord d'attaque des ailes,
- une gouverne de direction 108,
- des gouvernes de profondeur 109 articulées sur un empennage horizontal 110 ayant en pratique une incidence variable par rapport au fuselage de l'avion, d'où sa désignation courante de PHR pour "Plan Horizontal Réglable" (en anglais "THS" pour "Trimmable Horizontal Stabilizer"),
- et de deux moteurs repérés M1 et M2.

Les diverses surfaces orientables 103 à 110 précitées sont soumises à l'action d'actionneurs schématisés par des rectangles, à raison en pratique d'au moins deux actionneurs par surface orientable (ou groupe de surfaces).

Certains de ces rectangles contiennent simplement la lettre B, Y ou G. Ces rectangles désignent des servo-commandes classique de type hydraulique, et la lettre B, Y ou G figurant dans les rectangles identifie celui de trois circuits hydrauliques centralisés auquel est connectée la servo-commande considérée. Il est rappelé à ce propos que ces trois circuits sont, par convention, appelés respectivement circuit Bleu (Blue en anglais) d'où la lettre B, circuit Jaune (Yellow en anglais) d'où la lettre Y et circuit Vert (Green en anglais) d'où la lettre G.

D'autres rectangles sont grisés, désignant des actionneurs à puissance électrique. C'est ainsi le cas de trois moteurs électriques M'1, M'2 et M'3 de la partie électrique des actionneurs 101, d'un actionneur de trim de direction repéré 115, et d'une butée variable associée à la gouverne de direction 108, repérée TLU pour Travel Limitation Unit.

Les circuits hydrauliques B et Y sont respectivement pressurisés par des pompes Pₚ1 et Pₚ2 elles-mêmes entraînées par les moteurs M1 et M2 tandis que le circuit G est pressurisé par une électropompe EP.

De l'énergie électrique peut être fournie par des générateurs IDG1 ou IDG2 (IDG pour "Integrated Drive Generator") ou, si nécessaire, par un alternateur 121 entraîné par une éolienne escamotable 120, adaptée à venir en saillie vis à vis du fuselage en cas de besoin.

Les éléments 1XP, 2XP et 4XP sont des barres d'alimentation électrique alternative, respectivement alimentées par les éléments IDG1, IDG2 et 121 et auxquelles sont connectés les divers équipements électriques (moteurs électriques, électropompe ...)

L'élément PTU (pour "Power Transfer Unit") est un groupe de transfert qui a pour fonction de pressuriser le circuit B en cas d'arrêt du moteur M1.

Les éléments 122 et 123 sont des clapets de priorité situés respectivement sur les circuits B et Y, pour permettre d'alimenter en priorité les commandes de vol dites primaires en cas de baisse momentanée de pression.

La gouverne de direction 108 est actionnée par trois servo-commandes à entrée mécanique fonctionnant en parallèle. Cette gouverne 108 reçoit un ordre mécanique M en provenance du palonnier (non représenté) auquel s'ajoute en 124 un ordre électrique transmis par deux servo-commandes 125 et 126 d'amortissement de lacet ("Yaw Damper").

Le PHR 110 est actionné par deux actionneurs hydrauliques 127 et 128 commandant en position le PHR par l'intermédiaire d'un différentiel repéré 129. Ce PHR est commandé par un ordre électrique transmis par les moteurs M′1, M′2 et M′3. Il peut aussi recevoir un ordre mécanique M′ transmis par câble depuis le volant de trim situé au poste de pilotage. Cette commande mécanique a priorité : la sortie des moteurs électriques est débrayée lorsque la commande mécanique est actionnée.

A côté de la plupart des rectangles représentatifs d'un actionneur, sont indiqués celui (ou ceux) des calculateurs principaux (P1, P2) ou secondaires (S1, S2) qui commandent la manoeuvre de ces actionneurs. Lorsque deux calculateurs figurent auprès d'un même actionneur, cela signifie que le second calculateur (situé à droite ou en-dessous de l'autre) prend le relais du premier lorsque celui-ci tombe en panne.

Les diverses gouvernes ou surfaces orientables sont soumises à l'action de plusieurs actionneurs connectés à des sources de puissance différentes.

Ainsi les spoilers 104 et 105 sont soumis à l'action de servo-commandes classiques connectées aux circuits B ou Y.

Les ailerons 103 sont chacun soumis d'une part à une servo-commande classique connectée à l'un des circuits Y ou B et un actionneur hydraulique à secours électrique 101, connecté d'une part à l'autre des circuits Y ou B, et à une source électrique, ici la barre 4XP.

Ces actionneurs 101 peuvent donc, en cas de besoin, recevoir de la puissance électrique en provenance de l'alternateur associé à l'éolienne.

Les becs 107 sont soumis à une servo-commande classique connectée au circuit Y, et au moteur M′1.

Les volets 106 sont soumis à une servo-commande classique connectée au circuit B (les becs et les volets sont donc soumis à des servo-commandes connectées sur des circuits différents) et au moteur M′2.

La gouverne de direction est soumise à trois servo-commandes respectivement connectées à chacun des circuits Y, B et G, et les actionneurs 124 et 125 sont connectés aux circuits Y et G.

Les gouvernes de profondeur 109 sont soumises à des servo-commandes connectées, à droite, aux circuits G et Y et, à gauche, aux circuits B et G. Les actionneurs 127 et 128 sont connectés aux circuits B et Y.

On appréciera que dans l'exemple représenté tous les actionneurs connectés aux circuit G, c'est-à-dire au circuit pressurisé par l'électropompe, se trouvent à l'arrière de l'avion : ce circuit hydraulique centralisé G peut donc se réduire à un circuit local de très petite taille (très inférieure à celle des circuits Y et B) situé à l'arrière de l'avion.

Il va de soi que la description qui précède n'a été proposée qu'à titre d'exemple non limitatif et que de nombreuses variantes peuvent être proposées par l'homme de l'art sans sortir du cadre de l'invention selon les revendications qui suivent.

C'est ainsi que, dans l'exemple considéré ci-dessus, la partie hydrostatique des actionneurs 101 est alimentée par le réseau électrique de l'avion (1XP, 2XP, 4XP) mais, en variante non représentée, ces parties hydrostatiques peuvent être intégrées à des chaînes de secours totalement indépendantes du réseau électrique précité mais aussi éventuellement de l'ensemble de traitement que constitue l'ensemble des quatre calculateurs P1, P2, S1 et S2 : l'énergie électrique peut être fournie par exemple par un générateur de secours susceptible de prélever par exemple de l'énergie dans l'un ou l'autre des circuits Y ou B, et les commandes peuvent être transmises depuis les manches latéraux et le palonnier par un réseau électrique ou optique indépendant du réseau général.

D'autre part, si l'exemple de système de commandes de vol précité enseigne de prévoir un actionneur hydraulique à secours électrique sur chacun des ailerons, l'invention couvre également le cas où ces actionneurs seraient affectés à l'un quelconque, voire plusieurs, des degrés de liberté de l'avion.

## Revendications

1. Actionneur hydraulique (1, 1′) comportant au moins un système de vérin à double effet (10, 10′), un organe mobile de commutation (17, 17′), monté dans un logement (16) connecté hydrauliquement, d'une part à ce système de vérin, d'autre part, au travers d'un organe de distribution hydraulique (33, 33′), à des conduits d'alimentation et d'évacuation de fluide (34, 35) équipés de clapets d'isolation (38, 39, 38′, 39′), une réserve de fluide (47, 47′) connectée au conduit d'évacuation, et un organe de pilotage (51, 51′) adapté à commander cet organe mobile de commutation entre une configuration neutre, dans laquelle le système de vérin est isolé hydrauliquement vis à vis de l'organe de distribution hydraulique et une configuration active de service dans laquelle le système de vérin communique avec ledit organe de distribution hydraulique, caractérisé en ce qu'il comporte en outre un groupe de pompage commandé à vitesse variable (60, 61, 60′, 61′) connecté par un circuit auxiliaire de dérivation (71, 72, 73, 31, 32, 41), d'une part avec le logement (16) de l'organe mobile de commutation, d'autre part avec la réserve de fluide (47), l'organe mobile de commutation étant à trois positions et étant muni d'un moyen de pilotage complémentaire (49, 49′) adapté à commander ledit organe mobile de commutation entre ladite configuration neutre et une seconde configuration active dans laquelle le système de vérin communique avec ce circuit auxiliaire, grâce à quoi le système de vérin, le groupe de pompage et le circuit auxiliaire constituent une transmission hydrostatique.

2. Actionneur selon la revendication 1, caractérisé en ce que le groupe de pompage (60, 61, 60′, 61′) est spécifique dudit système de vérin.

3. Actionneur selon la revendication 1 ou la revendication 2, caractérisé en ce que le groupe de pompage fait partie d'un module auxiliaire (3) assujetti à un module de base (2) comportant le système de vérin, l'organe mobile de commutation, l'organe de distribution hydraulique, l'organe de pilotage de l'organe mobile de commutation, la réserve de fluide et les conduits d'alimentation et d'évacuation de fluide.

4. Actionneur selon l'une quelconque des revendications 1 à 3, caractérisé en ce qu'il comporte un bipasse (27) adapté à mettre le système de vérin en court-circuit en configuration neutre de l'organe mobile de commutation.

5. Actionneur selon la revendication 4, caractérisé en ce que dans le bipasse est prévue une restriction (28).

6. Actionneur selon l'une quelconque des revendications 1 à 5, caractérisé en ce que l'organe de distribution hydraulique (33,33′) est une servovalve.

7. Actionneur selon l'une quelconque des revendication 1 à 6, caractérisé en ce que l'organe de pilotage est une électrovanne (51) connectée aux conduits d'alimentation et d'évacuation de fluide (34, 35) et à une extrêmité du logement de l'organe mobile de commutation.

8. Actionneur selon l'une quelconque des revendication 1 à 7, caractérisé en ce que l'organe de pilotage complémentaire (49, 49′), distinct de l'organe de pilotage, est à commande électromagnétique, et est adapté à agir sur le tiroir en sens opposé au sens dans lequel agit l'organe de pilotage.

9. Actionneur selon l'une quelconque des revendications 1 à 8, caractérisé en ce que le groupe de pompage comporte un moteur électrique (60, 60′) entrainant une pompe hydraulique bidirectionnelle connectée à un conduit de drainage (62) raccordé à la réserve de fluide et à deux conduits d'aspiration et de refoulement (63, 64) raccordés au logement du tiroir.

10. Actionneur selon la revendication 9, caractérisé en ce que dans les conduits d'aspiration et de refoulement est disposé un double clapet (66, 67) piloté par les pressions desdits conduits, admettant une configuration neutre d'obstruction et deux positions extrêmes dans lesquelles lesdits conduits d'aspiration et de refoulement sont mis en communication avec les chambres du système à vérin via l'organe mobile de commutation lorsque celui-ci est dans sa seconde configuration active .

11. Actionneur selon l'une quelconque des revendications 1 à 10, caractérisé en ce que le système a vérin est un vérin à double effet.

12. Actionneur selon l'une quelconque des revendications 1 à 11, caractérisé en ce que l'organe mobile de commutation est un tiroir à mouvement linéaire.

13. Utilisation de l'actionneur selon l'une quelconque des revendications 1 à 12, dans laquelle l'organe mobile de commutation est commandé, en fonctionnement normal, entre sa configuration neutre et ladite configuration de service et, en fonctionnement de secours, entre cette configuration neutre et ladite seconde configuration de service.

14. Système de commandes de vol, pour un aéronef pourvu de jeux de surfaces orientables (103 - 110) pour la commande de cet aéronef en roulis, en tangage et en lacet, respectivement, comportant des circuits hydrauliques centralisés indépendants (B, Y, G), un réseau électrique (1XP, 2XP, 4XP), et des actionneurs pour la manoeuvre respectivement de ces jeux de surfaces orientables, l'un au moins (101) desdits actionneurs comportant un organe d'actionnement commandé par une servo-commande (2) alimentée par l'un (B, Y) desdits circuits hydrauliques centralisés, ce système étant caractérisé en ce que ledit actionneur comporte un module hydrostatique (3) monté en parallèle sur cette servo-commande, et comportant un groupe de pompage à alimentation électrique, et un ensemble de commutation (17, 49) adapté à commander l'organe d'actionnement, soit par la servo-commande, soit par le module hydrostatique, ce module hydrostatique étant connecté à une source de puissance électrique.

15. Système de commandes de vol selon la revendication 14, caractérisé en ce qu'il comporte en parallèle sur ledit actionneur (101) comportant une servocommande et un module hydrostatique, une autre servocommande alimentée par un autre (Y, B) desdits circuits hydrauliques.

16. Système de commandes de vol selon la revendication 14 ou la revendication 15, caractérisé en ce que ladite source de puissance électrique fait partie du réseau électrique.

17. Système de commandes de vol selon la revendication 14 ou la revendication 15, caractérisé en ce que ladite source de puissance électrique est indépendante dudit réseau électrique.

18. Système de commandes de vol selon la revendication 17, caractérisé en ce que ledit actionneur est connecté à des moyens de pilotage par réseau de commande indépendant de ce réseau électrique.

19. Système de commandes de vol selon l'une quelconque des revendications 14 à 18, caractérisé en ce que les surfaces orientables comportent deux ailerons (103) soumis chacun à un tel actionneur (101) comportant une servo-commande et un module hydrostatique.

20. Système de commandes de vol selon la revendication 19, caractérisé en ce que chacun de ces ailerons est en outre soumis à l'action d'une servocommande.

21. Système de commandes de vol selon l'une quelconque des revendications 14 à 20, caractérisé en ce qu'il comporte deux circuits hydrauliques centralisés indépendants (Y, B) respectivement, pressurisés chacun par un moteur (M1, M2) que comporte l'aéronef, et un troisième circuit hydraulique centralisé indépendant (G) pressurisé par une électropompe (EP) connectée au réseau électrique, situé à l'arrière de l'aéronef, tous les actionneurs situés à proximité des ailes de l'aéronef étant connectés à l'un ou l'autre des circuits hydrauliques pressurisés par les moteurs de l'aéronef.

## Claims

1. Hydraulic actuator (1, 1') comprising at least one double acting actuator system (10, 10'), a mobile switching member (17, 17') disposed in a housing (16) connected hydraulically to said actuator system and via an hydraulic distribution unit (33, 33') to fluid inlet and outlet pipes (34, 35) provided with isolating valves (38, 39, 38', 39'), a fluid reserve (47, 47') connected to the outlet pipe, and a control member (51, 51') adapted to command said mobile switching member to move between a neutral configuration in which the actuator system is isolated hydraulically from the hydraulic distribution unit and an active service configuration in which the actuator system communicates with said hydraulic distribution unit, characterised in that it further comprises a variable speed controlled pump system (60, 61, 60', 61') connected by an auxiliary branch circuit (71, 72, 73, 31, 32, 41) to the housing (16) of the mobile switching member and to the fluid reserve (47), the mobile switching member having three positions and being provided with additional control means (49, 49') adapted to command said mobile switching member to move between said neutral configuration and an active second configuration in which the actuator system communicates with said auxiliary circuit, whereby the actuator system, the pump system and the auxiliary circuit constitute a hydrostatic transmission.

2. Actuator according to claim 1 characterised in that the pump system (60, 61, 60', 61') is specific to said actuator system.

3. Actuator according to claim 1 or claim 2 characterised in that the pump system is part of an auxiliary module (3) slaved to a base module (2) comprising the actuator system, the mobile switching member, the hydraulic distribution unit, the control member of the mobile switching member, the fluid reserve and the fluid inlet and outlet pipes.

4. Actuator according to any one of claims 1 through 3 characterised in that it comprises a bypass (27) adapted to short-circuit the actuator system in the neutral configuration of the mobile switching member.

5. Actuator according to claim 4 characterised in that a restriction (28) is provided in the bypass.

6. Actuator according to any one of claims 1 through 5 characterised in that the hydraulic distribution unit (33, 33') is a servovalve.

7. Actuator according to any one of claims 1 through 6 characterised in that the control member is a solenoid valve (51) connected to the fluid inlet and outlet pipes (34, 35) and to one end of the housing of the mobile switching member.

8. Actuator according to any one of claims 1 through 7 characterised in that the additional control means (49, 49') separate from the control member is electromagnetically controlled and is adapted to operate on the slide valve in the opposite direction to that in which the control member operates.

9. Actuator according to any one of claims 1 through 8 characterised in that the pump system comprises an electric motor (60, 60') driving a bidirectional hydraulic pump connected to a drain pipe (62) connected to the fluid reservoir and to two suction and discharge pipes (63, 64) connected to the housing of the slide valve.

10. Actuator according to claim 9 characterised in that the suction and discharge pipes incorporate a double valve (66, 67) controlled by the pressures in said pipes allowing an obstruction neutral configuration and two end positions in which said suction and discharge pipes are placed in communication with the chambers of the actuator system via the mobile switching member when the latter is in its active second configuration.

11. Actuator according to any one of claims 1 through 10 characterised in that the actuator system is a double-acting actuator.

12. Actuator according to any one of claims 1 through 11 characterised in that the mobile switching member is a linear displacement slide valve.

13. Application of the actuator according to any one of claims 1 through 12 in which the mobile switching member is commanded in normal operation to move between its neutral configuration and said service configuration and in emergency operation to move between said neutral configuration and said second service configuration.

14. Flight control system for an aircraft incorporating control surfaces (103-110) for controlling said aircraft in roll, pitch and yaw, respectively, comprising independent centralised hydraulic circuits (B, Y, G), an electrical power supply system (1XP, 2XP, 4XP) and actuators for manoeuvring respective sets of control surfaces, at least one (101) of said actuators comprising an actuator unit controlled by a servocontrol unit (2) connected to one (B, Y) of said centralised hydraulic circuits, said system being characterised in that said actuator comprises, in parallel with said servocontrol unit, a hydrostatic module (3) comprising an electrically powered pump system and a selector element (17, 49) adapted to control the actuator member either via the servocontrol unit or via the hydrostatic module, said hydrostatic module being connected to an electrical power supply.

15. Flight control system according to claim 14 characterised in that it comprises in parallel with said actuator (101) comprising a servocontrol unit and a hydrostatic module another servocontrol unit connected to another (Y, B) of said hydraulic circuits.

16. Flight control system according to claim 14 or claim 15 characterised in that said electrical power supply is part of the electrical system of the aircraft.

17. Flight control system according to claim 14 or claim 15 characterised in that said electrical power supply is independent of said electrical system.

18. Flight control system according to claim 17 characterised in that said actuator is connected to control means independent of said electrical system of the aircraft.

19. Flight control system according to any one of claims 14 through 18 characterised in that the control surfaces comprise two ailerons (103) each operated by an actuator (101) comprising a servocontrol unit and a hydrostatic module.

20. Flight control system according to claim 19 characterised in that each of said ailerons is further operated by a servocontrol unit.

21. Flight control system according to any one of claims 14 through 20 characterised in that it comprises two independent centralised hydraulic circuits (Y, B) each pressurised by a respective engine (M1, M2) of the aircraft and an independent centralised third hydraulic circuit (G) pressurised by an electric pump (EP) connected to the electrical system of the aircraft, situated at the aft end of the aircraft, all actuators situated in the proximity of the wings of the aircraft being connected to one of other of the hydraulic circuits pressurised by the aircraft engines.

## Patentansprüche

1. Hydraulische Betätigungsvorrichtung (1, 1') mit wenigstens einem doppelwirkenden Kolbensystem (10, 10'), einem beweglichen Umschaltelement (17, 17'), das in einer Aufnahme (16) angebracht ist, welche einerseits mit diesem Kolbensystem und andererseits über ein hydraulisches Verteilerglied (33, 33') mit mit Abtrenndeckeln (38, 39, 38', 39') ausgestatteten Flüssigkeitszu- und -Abführleitungen (34, 35) hydraulisch verbunden ist, mit einem Flüssigkeitsvorrat (47, 47'), der an die Abführleitung angeschlossen ist, sowie mit einem Steuerelement (51, 51') zur Steuerung des beweglichen Umschaltelementes zwischen einer neutralen Stellung, bei der das Kolbensystem vom hydraulischen Verteilerglied hydraulisch abgekoppelt ist, und einer aktiven Arbeitsstellung, bei der das Kolbensystem mit besagtem hydraulischen Verteilerglied zusammenwirkt, **dadurch gekennzeichnet**, daß sie außerdem eine mit variabler Geschwindigkeit steuerbare Pumpgruppe (60, 61, 60', 61') umfaßt, die durch einen Umgehungshilfskreis (71, 72, 73, 31, 32, 41) einerseits mit der Aufnahme (16) für das bewegliche Umschaltelement und andererseits mit dem Flüssigkeitsvorrat (47) verbunden ist, wobei das bewegliche Umschaltelement drei Einstellpositionen aufweist und mit einem zusätzlichen Steuerungsmittel (49, 49') zur Steuerung des beweglichen Umschaltelementes zwischen der neutralen Stellung und einer zweiten aktiven Stellung, bei der das Kolbensystem mit diesem Hilfskreis zusammenwirkt, ausgestattet ist, wodurch das Kolbensystem, die Pumpgruppe und der Hilfskreis eine hydrostatische Kraftübertragung bilden.

2. Betätigungsvorrichtung nach Anspruch 1, dadurch gekennzeichnet, daß die Pumpgruppe (60, 61, 60', 61') spezifisch für das Kolbensystem ausgelegt ist.

3. Betätigungsvorrichtung nach Anspruch 1 oder 2, dadurch gekennzeichnet, daß die Pumpgruppe einen Teil eines Hilfsmoduls (3) bildet, das an einem Basismodul (2) befestigt ist, welches seinerseits das Kolbensystem, das bewegliche Umschaltelement, das hydraulische Verteilerglied, das Steuerungselement für das bewegliche Umschaltelement, den Flüssigkeitsvorrat sowie die Flüssigkeitszu- und -Abführleitungen umfaßt.

4. Betätigungsvorrichtung nach einem der Ansprüche 1 bis 3, dadurch gekennzeichnet, daß sie eine Umgehungsleitung (27) zum Kurzschließen des Kolbensystems in der neutralen Stellung des beweglichen Umschaltelementes aufweist.

5. Betätigungsvorrichtung nach Anspruch 4, dadurch gekennzeichnet, daß in der Umgehungsleitung eine Verengung (28) vorgesehen ist.

6. Betätigungsvorrichtung nach einem der Ansprüche 1 bis 5, dadurch gekennzeichnet, daß das hydraulische Verteilerglied (33, 33') ein Servoventil ist.

7. Betätigungsvorrichtung nach einem der Ansprüche 1 bis 6, dadurch gekennzeichnet, daß das Steuerungselement ein Elektroventil (51) ist, das mit der Flüssigkeitszu- und -Abführleitung (34, 35) sowie mit einem Ende der Aufnahme für das bewegliche Umschaltelement verbunden ist.

8. Betätigungsvorrichtung nach einem der Ansprüche 1 bis 7, dadurch gekennzeichnet, daß das von dem Steuerungselement verschiedene zusätzliche Steuerungsglied (49, 49') elektromagnetisch steuerbar ist und zur Einwirkung auf den Schieber in einer Richtung dient, die der Richtung, in die das Steuerungselement arbeitet, entgegengerichtet ist.

9. Betätigungsvorrichtung nach einem der Ansprüche 1 bis 8, dadurch gekennzeichnet, daß die Pumpgruppe einen Elektromotor (60, 60') umfaßt, der eine hydraulische, in zwei Richtungen arbeitende Pumpe antreibt, die mit einer Drainageleitung (62) verbunden ist, die ihrerseits mit dem Flüssigkeitsvorrat und mit zwei an der Aufnahme für den Schieber angeschlossenen Ansaug- und Ausstoßleitungen (63, 64) in Verbindung steht.

10. Betätigungsvorrichtung nach Anspruch 9, dadurch gekennzeichnet, daß in der Ansaug- und der Ausstoßleitung ein Zwillingsventil (66, 67) vorgesehen ist, das durch die Drücke aus diesen Leitungen steuerbar ist und so eine neutrale Schließstellung und zwei Endstellungen zuläßt, in denen die Ansaug- und die Ausstoßleitung mit den Kammern des Kolbensystems über das bewegliche Umschaltelement in Verbindung bringbar sind, wenn letzteres seine zweite aktive Stellung einnimmt.

11. Betätigungsvorrichtung nach einem der Ansprüche 1 bis 10, dadurch gekennzeichnet, daß das Kolbensystem von einem doppeltwirkenden Kolben gebildet wird.

12. Betätigungsvorrichtung nach einem der Ansprüche 1 bis 11, dadurch gekennzeichnet, daß das bewegliche Umschaltelement ein linear beweglicher Schieber ist.

13. Verwendung der Betätigungsvorrichtung nach einem der Ansprüche 1 bis 12, bei der das bewegliche Umschaltelement im Normalbetrieb zwischen seiner neutralen Stellung und der Arbeitsstellung und, bei Hilfsbetrieb, zwischen dieser neutralen Stellung und der zweiten Arbeitsstellung steuerbar ist.

14. Flugsteuersystem für ein Luftfahrzeug mit Gruppen ausrichtbarer Flächen (103-110) zur jeweiligen Steuerung dessen Roll-, Nick- und Gierbewegungen, mit unabhängigen, zentralisierten Hydraulikkreisen (B, Y, G), einem elektrischen Netz (1XP, 2XP, 4XP) und mit Betätigungsvorrichtungen für die jeweilige Bedienung dieser Gruppen ausrichtbarer Flächen, wobei mindestens eine (101) dieser Betätigungsvorrichtungen ein Betätigungselement aufweist, das durch eine Servosteuerung (2) gesteuert wird, die von einem (B, Y) der zentralisierten Hydraulikkreise versorgt wird, wobei dieses System **dadurch gekennzeichnet** ist, daß die Betätigungsvorrichtung ein hydrostatisches Modul (3), das parallel zu dieser Servosteuerung angeordnet ist und eine Pumpgruppe mit elektrischer Versorgung aufweist, sowie eine Schalteinrichtung (17, 49) umfaßt, die zur Steuerung des Betätigungselementes entweder über die Servosteuerung oder über das hydrostatische Modul dient, wobei letzteres mit einer Quelle für elektrische Leistung verbunden ist.

15. Flugsteuersystem nach Anspruch 14, dadurch gekennzeichnet, daß es parallel zur Betätigungsvorrichtung (101), die eine Servosteuerung und ein hydrostatisches Modul umfaßt, eine andere Servosteuerung aufweist, die von einem anderen (Y, B) der Hydraulikkreise versorgt wird.

16. Flugsteuersystem nach Anspruch 14 oder 15, dadurch gekennzeichnet, daß die Quelle für elektrische Leistung Teil des elektrischen Netzes ist.

17. Flugsteuersystem nach Anspruch 14 oder 15, dadurch gekennzeichnet, daß die Quelle für elektrische Leistung vom elektrischen Netz unabhängig ist.

18. Flugsteuersystem nach Anspruch 17, dadurch gekennzeichnet, daß die Betätigungsvorrichtung über ein vom elektrischen Netz unabhängiges Steuernetz mit Steuerungsmitteln verbunden ist.

19. Flugsteuersystem nach einem der Ansprüche 14 bis 18, dadurch gekennzeichnet, daß die ausrichtbaren Flächen zwei Querruder (103) umfassen, deren jedes an eine solche Betätigungsvorrichtung (101), die eine Servosteuerung und ein hydrostatisches Modul aufweist, angeschlossen ist.

20. Flugsteuersystem nach Anspruch 19, dadurch gekennzeichnet, daß jedes Querruder außerdem der Einwirkung einer Servosteuerung unterworfen ist.

21. Flugsteuersystem nach einem der Ansprüche 14 bis 20, dadurch gekennzeichnet, daß es zwei jeweils unabhängige und zentralisierte Hydraulikkreise (Y, B), die sämtlich jeweils durch einen im Luftfahrzeug enthaltenen Motor (M1, M2) mit Druck versorgt werden, und einen dritten unabhängigen, zentralisierten Hydraukkreis (G) umfaßt, der über eine Elektropumpe (EP) mit Druck beaufschlagt wird, die an das elektrische Netz angeschlossen ist und hinten am Luftfahrzeug angeordnet ist, wobei sämtliche Betätigungsvorrichtungen nahe bei den Flügeln des Luftfahrzeugs angeordnet und mit dem einen oder anderen der Hydraulikkreise verbunden sind, die durch die Motoren des Luftfahrzeugs mit Druck beaufschlagt werden.
